# FASCICULE DE BREVET EUROPEEN

(11) **EP 3 044 909 B1**
(45) Date de publication et mention de la délivrance du brevet: **06.03.2019**
(21) Numéro de dépôt: 14761849.0
(22) Date de dépôt: 09.09.2014
(51) Int. Cl.: H04L 12/28, H04L 12/725

(54) **PROCÉDÉ DE TRANSMISSION DE FLUX DE DONNEES A TRAVERS UN RESEAU DE TELECOMMUNICATION**
VERFAHREN ZUR ÜBERTRAGUNG VON DATENSTRÖMEN ÜBER EIN TELEKOMMUNIKATIONSNETZWERK
METHOD FOR TRANSMITTING DATA STREAMS THROUGH A TELECOMMUNICATION NETWORK

(30) Priorité: 09.09.2013 FR 1358653
(43) Date de publication de la demande: 20.07.2016
(73) Titulaire: InfoVista SAS, 91300 Massy (FR)
(72) Inventeur: DELATTRE, Michel, F-92100 Boulogne Billancourt (FR); LECERF, François, F-92370 Chaville (FR)
(74) Mandataire: IPAZ
(86) Numéro de dépôt international: PCT/EP2014/069176
(87) Numéro de publication internationale: WO 2015/032970

(56) Documents cités:
- US-A1- 2013 223 226
- ECKERT MARCUS ET AL BASU SAMIK SBASUIOTAASTATE EDU IOWA STATE UNIVERSITY DEPARTMENT OF COMPUTER SCIENCE 210 ATANASOFF HALL 50011 A: "QoE Management Framework for Internet Services in SDN Enabled Mobile Networks", 28 août 2013 (2013-08-28), RADIO FREQUENCY IDENTIFICATION; [LECTURE NOTES IN COMPUTER SCIENCE], SPRINGER BERLIN HEIDELBERG, BERLIN, HEIDELBERG, PAGE(S) 112 - 123, XP047039917, ISSN: 0302-9743 ISBN: 978-3-642-45339-7 abrégé; figure 1; tableau 1 page 115 - page 122
- ANDREAS KASSLER ET AL: "Towards QoE-driven multimedia service negotiation and path optimization with software defined networking", SOFTWARE, TELECOMMUNICATIONS AND COMPUTER NETWORKS (SOFTCOM), 2012 20TH INTERNATIONAL CONFERENCE ON, IEEE, 11 septembre 2012 (2012-09-11), pages 1-5, XP032470634, ISBN: 978-1-4673-2710-7

## Description

### DOMAINE TECHNIQUE

La présente invention se situe dans le domaine des télécommunications et concerne plus spécifiquement un procédé de transmission de flux de données entre une source connectée à un réseau de télécommunication étendu via un réseau d'accès local et un destinataire connecté audit réseau de télécommunication étendu via un réseau d'accès distant, ledit réseau de télécommunication étendu comportant au moins un module central de contrôle destiné à définir des paramètres de transfert desdits flux entre la source et le destinataire.

L'invention concerne également un dispositif adapté pour mettre en oeuvre le procédé.

L'invention concerne aussi un programme d'ordinateur mémorisé sur un support d'enregistrement comportant des instructions pour mettre en oeuvre les étapes du procédé selon l'invention, lorsqu'il est exécuté sur un ordinateur.

Ce procédé et ce dispositif peuvent être mis en oeuvre quelle que soit l'étendue géographique du réseau, quel que soit le débit acheminé par celui-ci et quel que soit le nombre d'usagers de ce réseau.

### ÉTAT DE LA TECHNIQUE ANTÉRIEURE

Dans les réseaux de télécommunication en mode paquet, les informations sont échangées en groupes appelés paquets constitués essentiellement d'un en-tête contenant les informations pour l'acheminement du paquet dans le réseau et des données à transmettre. Des informations d'adressage sont insérées dans les en-têtes pour permettre l'identification des flux d'informations par les applications finales. Les paquets sont véhiculés à travers le réseau étendu, et empruntent au gré de ce réseau des moyens de transmission et de commutation variés. Le transfert d'informations nécessite le déploiement d'équipements de commutation ou de routage aiguillant l'information depuis une source jusqu'à une destination à travers des moyens de transmission et des fonctions d'adaptation de l'information de manière à occuper le moins de ressources possibles et à maintenir des caractéristiques de transfert des flux malgré la concurrence de ces dernières. Il nécessite aussi des fonctions de contrôle de l'aiguillage et de l'adaptation de manière à assurer un service de transfert optimal et sûr.

Dans les premières générations de réseaux de paquets, les équipements déployés prenaient des décisions d'aiguillage et d'ordonnancement des émissions des paquets, paquet par paquet, et bond par bond. Cette approche avait l'avantage d'être robuste et pouvait être facilement déployée. En effet, chaque dispositif inséré dans le réseau se synchronise avec les dispositifs directement adjacents et applique de manière autonome des règles de transfert préalablement planifiées. Le service initial rendu était une mise en communication des équipements sans exigences fortes sur les caractéristiques de transfert de flux d'information et sans différenciation de flux. Les dispositifs ont une action coordonnée par des règles initiales cohérentes calculées lors d'une phase de planification de réseau, et les observations sont collectées pour juger de la pertinence et de l'efficacité du plan. La collecte est faite en un point central situé dans un système central de gestion et chargé de corréler l'ensemble des observations afin de construire une vue globale du système. Des phases d'ajustement permettent de redistribuer de nouvelles règles constituant un nouveau plan afin de faire évoluer le système en fonction des prévisions de besoins et des résultats obtenus lors des plans précédents. Le système central distribue des règles de fonctionnement (politiques) par des flux de commande vers les éléments de réseau chargés de les appliquer. Ces derniers génèrent des événements et donnent accès en lecture à des états qui sont collectés par le système central dans des flux de gestion. Les ressources du réseau sont donc partagées entre les flux d'informations qui traversent le réseau et les flux de commande et de gestion qui participent à la bonne marche du service de transport du réseau.

Les réseaux de télécommunication actuels sont confrontés, d'une part, à une convergence forte où la spécialisation a laissé place à un service unifié de transport de l'information, plus flexible, plus efficace, et moins coûteux, et d'autre part, à la virtualisation du système d'information où la consolidation et la rationalisation des ressources du système d'information introduit une forte mobilité des producteurs et consommateurs d'information dans la mesure où les applications ne sont plus attachées à des serveurs physiques par une opération d'installation, mais sont affectées dynamiquement à des serveurs par un orchestrateur. Cette évolution introduit une extrême variabilité des types de transfert que ces réseaux doivent traiter ainsi qu'une extrême variabilité des topologies d'échanges. Il devient alors indispensable d'adapter le transfert d'informations flux par flux, de coordonner ces adaptations de manière à retrouver un comportement global prédictible pour chaque application et d'arbitrer dynamiquement ia concurrence des applications en fonction d'objectifs opérationnels. Pour assurer ces fonctions, des dispositifs supplémentaires de gestion de ressources, d'optimisation et de filtrage ont été ajoutés aux dispositifs d'aiguillage pour mettre en place des mécanismes complexes de reconnaissance de flux (Deep Packet Inspection,...), de mesures de performances, d'optimisation de l'efficacité du transfert, et de mise en adéquation des moyens de transferts et des demandes selon une discipline globale. Ces dispositifs supplémentaires sont agencés sur les chemins de données et leur efficacité est d'autant plus grande que la surface de réseau couverte est grande et que le périmètre est équipé.

Récemment, le concept de Software Defined Network a introduit une nouvelle approche où le plan de contrôle est totalement découplé du plan de données. Ce découplage permet de déployer le plan de contrôle sur des plateformes de capacités plus grandes, mutualisées et prenant des décisions cohérentes pour un ensemble d'équipements de commutation ou routage. Le protocole de communication le plus avancé entre un plan de contrôle logiquement centralisé (un ou plusieurs contrôleurs) et le plan de données (des commutateurs réseau) est OpenFlow. Il est standardisé par "l'Open Networking Foundation" (ONF) et implémenté par de nombreux équipementiers. Le Software-Defined Networking est un concept-clef pour faire le pont entre la gestion dynamique des ressources réseau d'un côté et la demande en connectivité et en Qualité de service (QoS) des applications de type cloud computing. L'application de ces nouvelles approches aux réseaux étendus d'entreprise où les applications sont répartis sur des sites géographiquement éloignés et mis en relation à travers plusieurs réseaux privés virtuels (Virtual Private Network en anglais, abrégé en VPN) qui préservent le partitionnement et la sécurité logique d'un réseau local se heurte aux problèmes suivants :
- le réseau global est découpé en plusieurs domaines de routage autonomes et administrés par des entités distincts, typiquement le réseau local de l'entreprise (LAN pour Local Area Network) et plusieurs réseaux étendus d'opérateurs de télécommunication (WAN pour Wide Area Network), cette découpe fait obstacle à un plan de contrôle totalement centralisé ou homogène,
- le déploiement en surcouche, par exemple d'un plan de contrôle centralisé pour tous les réseaux locaux d'une entreprise distribués autour d'un réseau étendu pose un problème de réactivité, dans la mesure où le contrôleur centralisé ne peut pas maintenir des états cohérents aux deux extrémités d'un réseau étendu au rythme des flux,
- le réseau d'entreprise s'appuie généralement sur une pluralité de réseaux étendus pour interconnecter les sites afin d'atteindre une bonne disponibilité des services ; ces réseaux étendus, vus du réseau local de l'entreprise, constituent des chemins indépendants pour les flux d'information. Ces flux empruntent l'un de ces chemins indépendamment de leurs contenus et des exigences en qualité de service (QoS) et/ou d'expérience (QoE) requises pour les différents flux ;
- l'élasticité des services de communications rend difficile les opérations de configuration du réseau, il devient indispensable de mettre en place des procédures d'auto-configuration et d'auto-apprentissage.
- certains réseaux étendus ne se limitent pas à un simple service de transport générique indépendant du contenu des flux, l'entreprise peut s'appuyer, par exemple, sur les services d'un réseau CDN (Content Delivery Network,) pour ses flux Internet, ou encore, sur les services d'un opérateur « Cloud-based » qui peuvent inclure des optimisations de flux. Ces optimisations ne permettent plus de caractériser simplement une route par des métriques de base telles que le délai d'un paquet d'information.

Le but de l'invention est de pallier les inconvénients de l'art antérieur décrit ci-dessus.

Le document XP 47039917 décrit une méthode d'optimisation de la qualité d'expérience pour la transmission de services Multimédia s'appuyant sur une analyse préalable de la topologie du réseau d'échange desdits services, de la capacité des chemins de communications utilisés et des retards de transmission

Le document US 2013/0223226 décrit un circuit de commutation réseau comportant un couche matériel comprenant une première sous-couche destinée à réaliser un routage de paquet de données et une deuxième sous-couche destinée à réaliser un routage de flux, ledit circuit de commutation réseau étant apte à recevoir d'un contrôleur des règles pour effectuer le routage de paquet de données et des règles pour effectuer le routage de flux et à fournir lesdites règles respectivement à la première sous-couche et à la deuxième sous-couche.

### EXPOSÉ DE L'INVENTION

Ce but est atteint au moyen d'un procède de contrôle, d'un dispositif de contrôle et d'un programme d'ordinateur selon les revendications 1 à 6.

Le procédé selon l'invention s'applique quelles que soient les règles d'accès aux réseaux étendus décrivant les droits et les méthodes d'accès à ces réseaux. Par méthodes d'accès on entend les moyens pour atteindre les réseaux étendus et les paramètres de configuration de ces moyens. c'est à dire.

Ces méthodes d'accès s'appliquent, par exemple, pour configurer:
- un réseau d'accès local et distant ayant un ou plusieurs points de raccordement à un ou plusieurs réseaux étendus d'opérateurs,
- un réseau d'accès interconnecté par des réseaux étendus d'opérateurs offrant des comportements différenciés selon un marquage dans les paquets acheminés (par ex : champ DSCP de DiffServ ou CoS 802.1p),
- un réseau d'accès interconnecté en surcouche par une encapsulation de chaque paquet afin d'adresser ies équipements intermédiaires (Middleboxes) des réseaux d'accès,
- un réseau d'accès interconnecté via des mécanismes de fiabilisation, de sécurisation et d'optimisation des transferts des flux entre le réseau local et le réseau distant et situés soit dans un périmètre d'un réseau étendu d'opérateur, soit dans les réseaux d'accès eux-mêmes,
- un réseau d'accès accédant aux services de CDN (Content Delivery Network) pour acheminer le contenu d'informations au mieux.

Le procédé est adapté à la gestion de multiples règles de transfert, telles que par exemple :
- la sélection dans le réseau d'accès local d'une des règles possibles d'accès au réseau étendu,
- la sélection d'une des règles possibles d'accès au réseau étendu en vigueur dans le réseau d'accès distant,
- un chaînage de services de fiabilisation, de sécurisation et d'optimisation des transferts des flux entre le réseau d'accès local et le réseau d'accès distant.
- le paramétrage des mécanismes de fiabilisation, de sécurisation et d'optimisation des transferts des flux entre le réseau d'accès local et le réseau d'accès distant.

Ces règles de transfert modifient la fonction de transfert que subissent les flux d'informations lors de leur acheminement entre le réseau d'accès local et le réseau d'accès distant, et qui s'exprime par des critères d'appréciation tels que :
- délai, gigue, pertes regroupés généralement sous le terme de niveaux de performance de qualité de service (QoS),
- probabilité de bon acheminement, probabilité d'interception ou de corruption,
- temps de réponse, perception globale du service, regroupés généralement sous le terme de niveaux de performance de qualité d'expérience (QoE).

Le procédé permet de créer dynamiquement une pluralité de chemin d'échanges des flux. Ceci est obtenu, par exemple, en :
- modifiant l'adresse locale identifiant l'équipement intermédiaire en charge du raccordement avec le réseau étendu (middlebox, routeur, commutateur) en du réseau d'accès local,
- détournant de manière transparente aux usagers les flux vers un moyen de marquage ou d'encapsulation des paquets des flux échangés,
- télécommandant les moyens de transfert situés sur le chemin des flux dans les réseaux d'accès local et distant afin de marquer ou d'encapsuler les paquets des flux échangés,
- créant de nouveaux moyens de traitement des flux en orchestrant les machines virtuelles offrant ces nouveaux moyens.

Ces actions sont obtenues en reconfigurant les moyens de transfert utilisés pour l'acheminement des flux tels que routeur, commutateur, moyens d'optimisation, de fiabilisation et de sécurisation.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 représente un schéma général d'un système d'information
   dans lequel est mis en oeuvre le procédé selon l'invention ;
- la figure 2 est un schéma bloc illustrant les interactions des modules permettant la mise en oeuvre du procédé selon l'invention;
- la figure 3 illustre schématiquement un exemple de mise en oeuvre du procédé selon l'invention ;
- la figure 4 illustre schématiquement un exemple préféré de mise en oeuvre du procédé selon l'invention entre deux sites échangeant des flux de données.

### EXPOSE DETAILLE DE MODES DE REALISATION PARTICULIERS

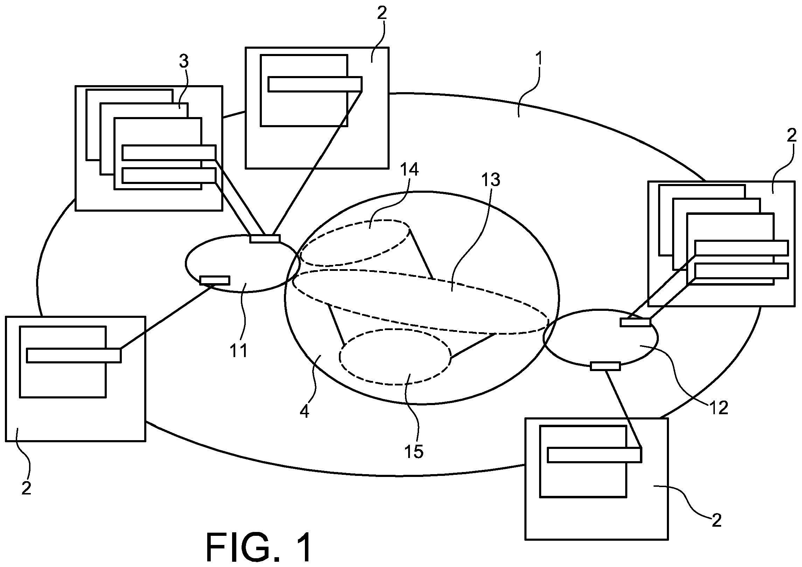

Le procédé de l'invention sera décrit dans une mise en oeuvre dans un système d'information distribué 1 autour d'un réseau en mode paquet tel que illustré schématiquement par la figure 1 dans lequel des participants 3 (machines ou individus) d'une application en réseau impliquant des terminaux mobiles ou fixes ou des serveurs physiques ou virtuels (par exemple, des serveurs de Cloud Computing) échangent des flux de données en mode paquet. Ces applications peuvent être, par exemple,
- des applications de communication multimédia telles que la téléphonie, la visiophonie, la vidéoconférence,
- des applications de distribution multimédia telles que la vidéo à la demande, les diffusions, les syndications de contenu,
- des applications de consultation telles que les annuaires, les services réseaux interactifs,
- des applications de partage d'information telles que les échanges peer-to-peer, les bases de données réparties,
- et plus généralement, des applications informatiques dont les éléments s'exécutent sur des machines éloignées et, se synchronisent et échangent de l'information à travers le réseau.

Les participants 3 (machines ou individus) d'une application en réseau représentés sur la figure 1 ont des rôles de consommateurs et de producteurs d'information. Ces rôles peuvent changer au cours de la vie d'une application, par exemple lors d'une session. Ces participants se rattachent au réseau en des points géographiques ou administratifs et ils forment un tout vu du réseau dénommé Usager 2,5. Un Usager peut être une agence, une entreprise, ou un individu itinérant.

Le réseau de transit 4 représente une capacité de transport fortement partagé entre une multitude d'usagers 2,5 et/ou réseaux privés. La caractéristique de cette capacité de transport reste stable vue d'un usager malgré la variabilité de sa propre consommation ou de production d'information que l'usager peut ne pas signaler explicitement au gestionnaire de réseau par un changement d'abonnement ou une ouverture/fermeture de session.

Des réseaux d'accès 11, 12 permettent aux participants 3 de se connecter à des réseaux étendus de transit 13, 14 et 15 pour échanger des flux de données.

La multiplicité de ces réseaux étendus de transit 13, 14, et 15 renforce la disponibilité des services d'échanges et permet d'utiliser les moyens adaptés aux demandes des flux d'information. Par exemple, des flux peuvent être gourmands en bande passante mais peu exigeants en délai, d'autres au contraire, servent des applications sensibles au temps de réponse. Cette multiplicité donne au réseau de transit 4 une capacité hybride mise à profit par le procédé selon l'invention.

La figure 1 montre plusieurs réseaux de transit hybrides 4 vus des réseaux d'accès 11,12. Le réseau d'accès 11 pour un usager 2 présente un cas de multi-raccordement à plusieurs réseaux d'opérateurs 13,14. Le procédé selon l'invention permet des échanges de flux entre les réseaux d'accès 11,12, via le réseau étendu 14, bien que le réseau d'accès 12 n'ait pas de raccordement direct avec ce réseau étendu 14. Le réseau étendu 15 peut être un cas de réseau hybride CDN ou un réseau en surcouche (overlay) offrant des services optimisés pour chaque entreprise cliente (capacité dite multi-tenant) dont les participants sont répartis géographiquement.

Les réseaux d'accès 11, 12 présentent des capacités de transport limitées avec le réseau étendu de transit. Il en résulte que les flux d'informations échangés entre les participants 3 subissent de fortes distorsions en raison du fait que les débits de raccordement des réseaux d'accès 11, 12 sont très inférieurs à ceux des débits d'émission des éléments physiques terminaux, ou en raison de compétitions entre usagers 2,5 desservis par un réseau d'accès. Ces fortes distorsions apparaissent lors de périodes de temps dites congestionnées. Une discipline cohérente entre participants 3 permet d'éviter ces congestions.

Le procédé selon l'invention s'appuie sur un dispositif de contrôle distribué des échanges de flux à travers le réseau de télécommunication étendu au sein du système d'information 1 comportant des modules agencés au plus près des moyens d'accès au Réseau étendu de manière à maîtriser la fonction de transfert d'un flux entre les accès des consommateurs et les accès des producteurs. Ces modules sont aptes à reconnaître et analyser ies flux d'informations échangés entre les différents participants 3 répartis géographiquement afin de maîtriser la fonction de transfert de chaque flux et de coordonner l'ensemble des fonctions de transferts pour obtenir l'efficacité optimale et le respect d'objectifs globaux de performances et de sécurité.

L'organisation distribuée du dispositif de contrôle permet de maîtriser les fonctions de transferts d'un grand nombre de flux échangés par les consommateurs et producteurs d'informations quelle que soit l'étendue géographique du réseau, quel que soit le débit acheminé par celui-ci et quel que soit le nombre d'usagers.

Ces fonctions de transfert se caractérisent par :
- des droits,
- des objectifs,
- des performances,
- des ressources consommées.

Les ressources consommées sont essentiellement de la bande passante sur les moyens de transferts mais recouvrent également les capacités de stockage temporaire et de traitement.

Les performances sont essentiellement les performances perçues (QoE) par les consommateurs dans le cadre d'une application, c'est-à-dire, les indicateurs qui représentent la capacité des consommateurs à faire un usage productif de l'information transférée. Dans le cadre d'applications procédant à des interactions client-serveur par exemple, un indicateur représentatif est le délai de transaction caractérisé par le temps d'attente. Dans un cadre plus général d'applications réparties autour de réseaux de télécommunications en mode paquet, les indicateurs peuvent être le délai absolu de transfert des paquets, la gigue de ces paquets, le taux de perte de paquets ou un débit de transfert.

Les objectifs sont l'ensemble des paramètres qui permettent d'arbitrer la concurrence des flux. Cette concurrence des flux impose un partage des ressources disponibles et limite donc les ressources consommées de chaque fonction de transfert ce qui dégrade les performances individuelles. Les objectifs permettent d'ajuster chaque fonction de transfert pour l'amener dans une plage de fonctionnement où toutes les fonctions de transferts répondent aux mieux à leurs objectifs.

Les droits sont l'ensemble des paramètres qui permettent de s'assurer de la conformité du flux à une politique de sécurité.

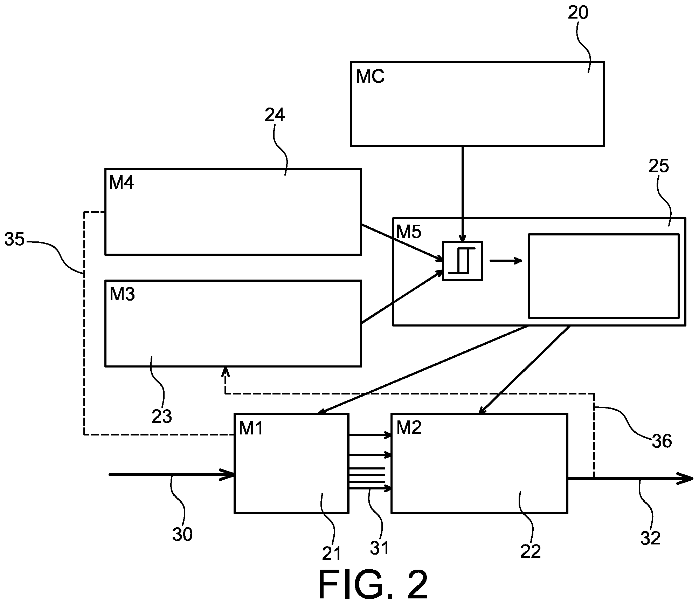

La figure 2 illustre schématiquement les modules du dispositif de contrôle distribué et leur interaction lors d'une mise en oeuvre du procédé.

Ce dispositif de contrôle comporte :
Un module central MC (référencé 20) destiné à établir une politique globale définissant les règles de transfert des flux entre une source connectée au réseau étendu via un réseau d'accès local et un destinataire connecté audit réseau étendu via un réseau d'accès distant, un module M1 (référencé 21) destiné à identifier les flux d'information, un module M2 (référencé 22) destiné à appliquer aux flux 30 des opérations de routage et d'optimisation, un module M3 (référencé 23) destiné à mesurer les QoE (Quality of Experience) obtenues sur chaque flux 32, un module M4 (référencé 24) destiné à superviser les moyens de transfert, un module M5 (référencé 25) destiné à évaluer l'écart entre des objectifs de QoE et des résultats observés et à fournir les règles de transfert au module M2 de manière à réduire l'écart évalué et à amener le système à un équilibre maximisant la QoE.

En fonctionnement, le module central MC (référencé 20) introduit dans le système les objectifs de QoE et la politique de maximisation de performance, le module M1 21 identifie les flux d'information émis par un producteur d'information et analyse ces flux pour déterminer les règles d'accès au réseau étendu en vigueur.

A cet effet, le module M1 21:
- utilise des mécanismes de DPI (Deep Packet Inspection),
- découvre les capacités de raccordement au réseau étendu en analysant, par exemple, les adresses locales MAC,
- découvre les possibilités d'action au réseau d'accès distant en insérant, par exemple, des données de contrôle dans les flux d'information afin d'entretenir une table d'association destinataire de flux - possibilités d'action.

Le module M2 22 effectue les opérations de routage et d'optimisation en se conformant à des règles de transfert. En particulier il effectue les opérations de marquage, d'encapsulation et d'aiguillage en bordure des réseaux étendus de transit, comme cela est illustré schématiquement par la figure 2. Ces opérations permettent de définir des chemins supplémentaires et d'appliquer sur lesdits chemins supplémentaires des mécanismes de fiabilisation, de sécurisation et d'optimisation des transferts des flux (compression, accélération, restitution, conditionnement de flux, ajustement de bande passante) entre le réseau d'accès local et le réseau d'accès distant. Il transfère chaque nouveau flux au destinataire via le chemin supplémentaire selon les nouvelles règles de transfert.

Le module M3 23 mesure en continu les QoE des flux perçues à la sortie du module M2. Ce module M3 23 est, par exemple, adapté pour relever en continu les temps d'arrivée des informations des flux 30 et 32 et déduire, par corrélation, les niveaux de performances de QoS et de QoE pour chacun des flux identifiés.

Le module M4 24 supervise les moyens de transfert. Ces derniers comprennent les moyens de transmission du réseau et les moyens d'adaptation et de transformation comme la fiabilisation, la sécurisation et l'optimisation des flux. Il est informé par le module M1 21 des possibilités d'action au réseau d'accès distant par des messages d'états 35. Lorsque le flux peut être contrôlé de manière coordonnée à la fois dans le réseau d'accès local et le réseau d'accès distant, il utilise les flux de contrôle servant à la coordination pour effectuer cette supervision.

Le module M5 reçoit en continu les indicateurs de QoE et les rapports de supervision des moyens de transfert, évalue en continu l'écart entre les objectifs de QoE et les résultats observés et prend les décisions de réglage du module M2 en fonction des états des moyens de transfert de manière à réduire l'écart et à amener le système à un équilibre maximisant la QoE.

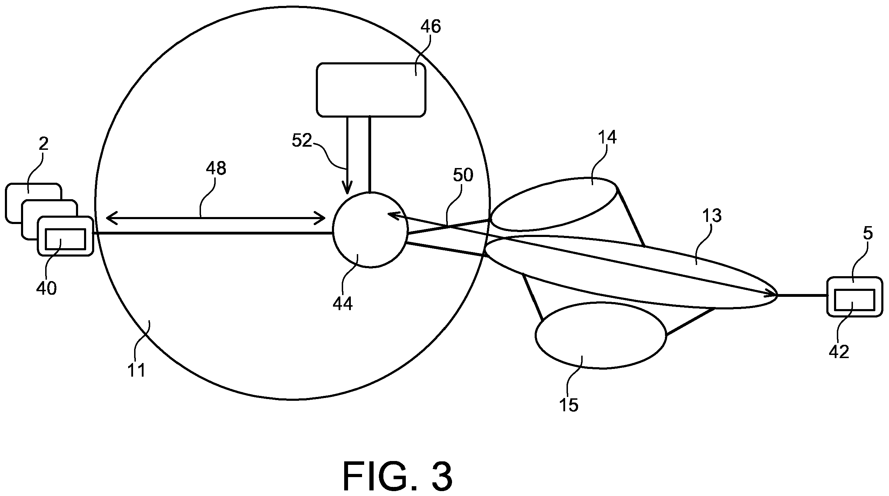

La figure 3 illustre schématiquement un exemple de mise en oeuvre du procédé selon l'invention dans lequel, une machine informatique 40 d'un Producteur d'informations d'un site Usager 2 échange des flux de données avec une machine informatique 42 d'un Consommateur d'informations d'un site Usager 5. Les flux échangés sont détournés par un élément de commutation 44 vers un module de contrôle 46. Ce dernier comporte un module de type M2 apte à appliquer aux flux détournés une chaîne de fonctions telles que la sécurité, la compression, l'accélération, conditionnement de flux, l'ajustement de bande passante. Ces fonctions sont chaînées flux par flux. A titre d'exemple, l'élément de commutation 44 peut être un commutateur selon l'architecture SDN (Software-defined Network) présentant une interface de contrôle 52 basée sur les spécifications OpenFlow. Il est à noter que le module de contrôle 46 s'insère ou se retire dynamiquement sur le chemin des flux de données.

Ainsi, un flux d'informations 48 échangé avec la machine informatique distante 42 sur le réseau étendu 11 sera transformé en un flux d'informations 50 et acheminé sur I réseau étendu 13 et, éventuellement, par le réseau étendu 14 ou le réseau étendu 15

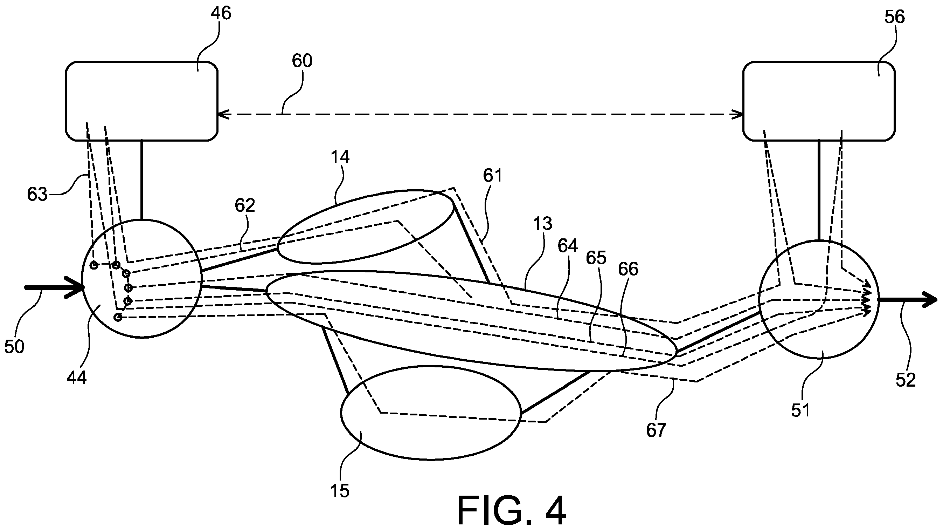

La figure 4 illustre schématiquement un exemple préféré de mise en oeuvre du procédé.

En référence à la figure 4, un élément de commutation 44 piloté par le module de contrôle 46 répartit les flux d'informations 50 sur des chemins d'accès 61, 62, 63, 64, 65, 66 et 67 au site distant. Ce dernier comporte un élément de commutation 54 qui dessert les destinataires de flux 52.

Le chemin d'accès 64 est le chemin d'accès par défaut. Sans le procédé et le dispositif de l'invention, les éléments de commutation du réseau d'accès local routent les flux à destination d'un réseau d'accès distant via le réseau de transit 13 (voir figure 3).

Le chemin d'accès 65 correspond à un marquage des flux effectué par l'élément de commutation 44 à la demande du module de contrôle 46 pour différencier des services dans le réseau de transit 13. Si le module de contrôle 46 découvre que les flux peuvent être contrôlés par un autre module de contrôle 56 avec qui il peut échanger de l'information de contrôle 60, le chemin d'accès 65 est alors créé dynamiquement pour améliorer le transfert de certains flux.

Les modules de contrôle 46 et 56 supervisent le service du réseau de transit 13 par des mesures en continu orientées QoE c'est-à-dire des mesures de bout-en-bout flux par flux. Le module de contrôle 46 réserve l'usage de ce nouveau chemin d'accès aux flux nécessitant ce service amélioré.

Le chemin d'accès 66 correspond à une encapsulation des flux dans un tunnel reliant l'élément de commutation 44 et l'élément de commutation 54 de manière, par exemple, à prolonger un réseau privé d'entreprise sur un réseau étendu ouvert à tous comme Internet. Les flux vont bénéficier d'une chaîne de services tel que sécurisation et optimisation des flux adaptée au réseau privé d'entreprise. Ces services nécessitent une coordination entre les deux éléments de commutation 44 et 54. Les informations échangées 60 entre les modules de contrôle 46 et 56 assurent cette coordination. Les deux modules de contrôle 46 et 56 supervisent les transferts par des mesures en continu orientées QoE c'est-à-dire mesure de bout-en-bout flux par flux de manière à utiliser au mieux les ressources nécessaires à cette chaîne de services.

Le chemin d'accès 67 correspond à une encapsulation des flux dans un tunnel reliant l'élément de commutation 44 à un équipement du réseau 15 (réseau de transit 3). Dans ce cas, l'entreprise peut déléguer à l'opérateur du réseau de transit 3 les traitements d'optimisation effectués sur le chemin d'accès 66. Les deux modules de contrôle 46 et 56 vont supervisent ce service du réseau de transit 3 par des mesures en continu orientées QoE c'est-à-dire, des mesures de bout-en-bout flux par flux.

Le module de contrôle 46 réserve l'usage de ce nouveau chemin d'accès aux flux nécessitant ce service optimisé.

Le chemin d'accès 61 correspond à une encapsulation des flux dans un tunnel reliant l'élément de commutation 44 à l'élément de commutation 54 empruntant le réseau de transit 14 de manière, par exemple, à améliorer la disponibilité du service en ayant une alternative au réseau de transit 13. Un exemple est un site raccordé au réseau étendu par des moyens technologiques différents qui peuvent être filaires et non filaires (réseau 4G, SATCOM, ...) ou par des moyens opérés par des opérateurs différents. Les deux modules de contrôle 44 et 54 supervisent les transferts par des mesures en continu orientées QoE c'est-à-dire mesure de bout-en-bout flux par flux de manière à répartir au mieux les flux sur les réseaux de transit. Le module de contrôle 56 profite de ce tunnel pour répartir ses propres flux locaux bien que l'élément de commutation 54 et ce module de contrôle 56 n'aient pas d'accès direct au réseau de transit 14.

Le chemin d'accès 62 correspond à un simple aiguillage local entre le réseau de transit 13 et le réseau de transit 14. Cet aiguillage ne nécessite pas d'encapsulation et permet donc le traitement des flux individuels par le réseau de transit 14.

Les deux modules de contrôle 46 et 56 supervisent les transferts par des mesures en continu orientées QoE et le module de contrôle 56 connaîtra la route prise par un flux par échange d'un flux d'information 60 avec le module de contrôle 46.

Le flux d'informations 60 échangé peut bénéficier aussi de la multiplicité des chemins d'accès bien qu'il ne forme qu'un seul flux de du module de contrôle 46 au module de contrôle 56.

Une technique MPTCP (multipath TCP de l'IETF RFC 6182 et 6824) permet de répartir dynamiquement ces échanges sur plusieurs connexions. L'avantage retiré est :
- une surveillance et une caractérisation des chemins d'accès même en l'absence de flux d'informations « usagers » aiguillés sur ces chemins d'accès,
- une charge, induite par le flux d'informations 60, peu dépendante du nombre de chemins d'accès créés dynamiquement.

## Revendications

1. Procédé de contrôle des échanges de flux de données entre au moins une source connectée à un réseau de télécommunication étendu (4) via un réseau d'accès local (40, 44) et au moins un destinataire connecté audit réseau de télécommunication étendu (4) via un réseau d'accès distant (42, 54), comportant les étapes suivantes:
- analyser les flux échangés pour déterminer les règles d'accès au réseau étendu en vigueur ainsi que les objectifs de QoE attachés à ces flux,
- collecter en continu des caractéristiques mesurées de transfert des flux pendant le transfert desdits flux,
- définir de nouvelles règles de transfert de flux en fonction du résultat de l'analyse,
- transmettre au réseau d'accès distant les nouvelles règles de transfert de flux,
- ,
- détourner les flux échangés au moyen d'un élément de commutation (44) vers un module de contrôle (46) apte à appliquer aux flux détournés une chaîne de fonctions telles que la sécurité, la compression, l'accélération, le conditionnement de flux, l'ajustement de bande passante,
et
- transférer les flux au destinataire selon les nouvelles règles de transfert en utilisant au moins un chemin supplémentaire sous le contrôle du module de contrôle (46) et d'au moins un autre module de contrôle (56) avec lequel le module de contrôle (46) échange des informations de contrôle (60) de manière à utiliser au mieux les ressources réseaux disponibles.

2. Procédé selon la revendication 1 comportant en outre les étapes suivantes :
- mesurer en continu les QoE obtenues pour chaque flux,
- évaluer en continu l'écart entre des objectifs de QoE prédéfinis et les QoE mesurées,
- adapter les nouvelles règles de transfert en fonction des états des moyens de transfert de manière à réduire l'écart entre les objectifs de QoE prédéfinis et les QoE mesurées et à amener le système à un équilibre maximisant la QoE.

3. Procédé selon la revendication 2 comportant en outre une étape consistant à coordonner l'ensemble des ajustements des fonctions de transfert de tous les flux de manière à optimiser l'utilisation des ressources réseaux disponibles.

4. Procédé selon la revendication 3 comportant en outre une étape consistant à collecter des caractéristiques de transfert de flux de contrôle destinés à coordonner les échanges entre le réseau d'accès local et le réseau d'accès distant de manière à superviser en continu les moyens de transfert des flux.

5. Dispositif de contrôle distribué des échanges de flux de données entre au moins une source connectée à un réseau de télécommunication étendu via un réseau d'accès local et au moins un destinataire connecté audit réseau de télécommunication étendu via un réseau d'accès distant comportant un module central MC (20) destiné à établir une politique globale définissant les règles de transfert des flux entre la source et le destinataire, un module M1 (21) destiné à identifier les flux d'information et à analyser ces flux pour déterminer les règles d'accès au réseau étendu en vigueur, un module M2 (22) destiné à acheminer les flux entre un réseau d'accès local et un réseau d'accès distant selon les règles de transfert adaptées pour chaque flux, et à créer dynamiquement au moins un chemin supplémentaire d'échange des flux à partir des nouvelles règles de transfert, un module M3 (23) destiné à mesurer en continu les QoE obtenues sur les flux à la sortie du module M2, un module M4 (24) destiné à superviser en continu les moyens de transfert des flux identifiés par le module M1, un module M5 (25) qui reçoit en continu des indicateurs de QoE mesurés par le module M3 et des rapports de supervision des moyens de transfert établis par le module M4, évalue en continu l'écart entre des objectifs de QoE et les résultats observés et définit les nouvelles règles de transfert en fonction des états des moyens de transfert, ,
**caractérisé en ce qu'**il comporte un élément de commutation (44) adapté pour détourner les flux échangés au moyen d'un élément de commutation (44) vers un module de contrôle (46) apte à appliquer aux flux détournés une chaîne de fonctions telles que la sécurité, la compression, l'accélération, conditionnement de flux, l'ajustement de bande passante, ledit module de contrôle (46) étant apte à échanger de l'information de contrôle (60) avec un autre module de contrôle (56) de manière à transférer les flux au destinataire selon les nouvelles règles de transfert en utilisant au moins un chemin supplémentaire sous le contrôle des modules de contrôle (46) et (56) par des mesures en continu orientées QoE de bout-en-bout flux par flux pour réduire l'écart évalué et amener le système à un équilibre maximisant la QoE.

6. Programme d'ordinateur mémorisé sur un support d'enregistrement comportant des instructions pour mettre en oeuvre les étapes du procédé selon l'une quelconque des revendications 1 à 4 lorsqu'il est exécuté sur un ordinateur.

## Patentansprüche

1. Verfahren zum Steuern des Austauschs von Datenströmen zwischen zumindest einer Quelle, die über ein lokales Zugangsnetz (40, 44) mit einem erweiterten Telekommunikationsnetz (4) verbunden ist, und zumindest einem Empfänger, der über ein Fernzugangsnetz (42, 54) mit dem erweiterten Telekommunikationsnetz (4) verbunden ist, umfassend die nachstehenden Schritte:
- Analysieren der ausgetauschten Datenströme, um die geltenden Zugangsregeln zum erweiterten Netz sowie die mit diesen Datenströmen zusammenhängenden QoE-Ziele festzulegen;
- kontinuierliches Erfassen von Datenstromtransfermessgrößen während des Datenstromtransfers,
- Definieren neuer Datenstromtransferregeln in Abhängigkeit vom Ergebnis der Analyse,
- Übertragen der neuen Datenstromtransferregeln an das Fernzugangsnetz,
- Umleiten der ausgetauschten Datenströme mittels eines Schaltelements (44) zu einem Steuermodul (46), das dazu geeignet ist, auf die umgeleiteten Datenströme eine Reihe von Funktionen anzuwenden, wie Sicherheit, Komprimierung, Beschleunigung, Datenstromkonditionierung, Bandbreiteneinstellung,
und
- Übertragen der Datenströme an den Empfänger gemäß den neuen Transferregeln unter Verwendung von zumindest einem zusätzlichen Pfad unter der Steuerung des Steuermoduls (46) und zumindest eines weiteren Steuermoduls (56), mit dem das Steuermodul (46) Steuerungsinformationen (60) austauscht, so dass die verfügbaren Netzressourcen bestmöglich genutzt werden.

2. Verfahren nach Anspruch 1, ferner umfassend die nachstehenden Schritte:
- kontinuierliches Messen der für jeden Datenstrom erhaltenen QoE,
- kontinuierliches Auswerten der Abweichung zwischen den vordefinierten QoE-Zielen und der gemessenen QoE,
- Anpassen der neuen Transferregeln in Abhängigkeit von den Zuständen der Transfereinrichtungen, so dass die Abweichung zwischen den vordefinierten QoE-Zielen und der gemessenen QoE verringert wird und das System auf ein die QoE maximierendes Gleichgewicht gebracht wird.

3. Verfahren nach Anspruch 2, ferner umfassend einen Schritt, der darin besteht, die gesamten Anpassungen der Transferfunktionen aller Datenströme zu koordinieren, so dass die Nutzung der verfügbaren Netzressourcen optimiert wird.

4. Verfahren nach Anspruch 3, ferner umfassend einen Schritt, der darin besteht, Transferkenngrößen der Steuerdatenströme zu erfassen, die dazu bestimmt sind, die Austausche zwischen dem lokalen Zugangsnetz und dem Fernzugangsnetz zu koordinieren, so dass die Datenstromtransfereinrichtungen kontinuierlich überwacht werden.

5. Verteilte Steuereinrichtung zum Steuern des Austauschens von Datenströmen zwischen einer Quelle, die über ein lokales Zugangsnetz mit einem erweiterten Telekommunikationsnetz verbunden ist, und zumindest einem Empfänger, der über ein Fernzugangsnetz mit dem erweiterten Telekommunikationsnetz verbunden ist, enthaltend ein zentrales Modul MC (20), das dazu bestimmt ist, eine globale Richtlinie festzulegen, die die Regeln zum Transfer der Datenströme zwischen der Quelle und dem Empfänger definiert, ein Modul M1 (21), das dazu bestimmt ist, die Informationsdatenströme zu identifizieren und diese Datenströme zu analysieren, um die geltenden Zugangsregeln zum erweiterten Netz zu bestimmen, ein Modul M2 (22), das dazu bestimmt ist, die Datenströme zwischen einem lokalen Zugangsnetz und einem Fernzugangsnetz gemäß den für jeden Datenstrom angepassten Transferregeln weiterzuleiten und zumindest einen zusätzlichen Datenstromaustauschpfad ausgehend von den neuen Transferregeln zu erstellen, ein Modul M3 (23), das dazu bestimmt ist, die über die Datenströme erhaltenen QoE am Ausgang des Moduls M2 kontinuierlich zu messen, ein Modul M4 (24), das dazu bestimmt ist, die Einrichtungen zum Transfer der von dem Modul M1 identifizierten Datenströme kontinuierlich zu überwachen, ein Modul M5 (25), das kontinuierlich die von dem Modul M3 gemessenen QoE-Indikatoren und die von dem Modul M4 erstellten Überwachungsberichte der Transfereinrichtungen empfängt, kontinuierlich die Abweichung zwischen den QoE-Zielen und den festgestellten Ergebnissen auswertet und die neuen Transferregeln in Abhängigkeit von den Zuständen der Transfereinrichtungen definiert, **dadurch gekennzeichnet, dass**
sie ein Schaltelement (44) enthält, das dazu ausgelegt ist, die ausgetauschten Datenströme mittels eines Schaltelements (44) zu einem Steuermodul (46) umzuleiten, das dazu geeignet ist, auf die umgeleiteten Datenströme eine Reihe von Funktionen anzuwenden, wie Sicherheit, Komprimierung, Beschleunigung, Datenstromkonditionierung, Bandbreiteneinstellung, wobei das Steuermodul (46) dazu geeignet ist, Steuerungsinformationen (60) mit einem weiteren Steuermodul (56) auszutauschen, so dass die Datenströme an den Empfänger gemäß den neuen Transferregeln unter Verwendung von zumindest einem zusätzlichen Pfad unter der Steuerung der Steuermodule (46) und (56) transferiert werden, und zwar durch kontinuierliche, QoE-orientierte, vollständige Flow-by-Flow-Messungen, um die ausgewertete Abweichung zu verringern und das System in ein QoE-maximierendes Gleichgewicht zu bringen.

6. Computerprogramm, das auf einen Aufzeichnungsträger abgespeichert ist und Anweisungen enthält, um bei Ausführen auf einem Computer die Schritte des Verfahrens nach einem der Ansprüche 1 bis 4 auszuführen.

## Claims

1. Method for controlling exchanges of data flows between at least one source connected to a wide area telecommunication network (4) via a local access network (40, 44) and at least one recipient connected to said wide area telecommunication network (4) via a remote access network (42, 54), comprising the following steps:
- analyzing the exchanged flows in order to determine the current rules of access to the wide area network as well as the QoE objectives attached to these flows,
- continuously collecting measured transfer characteristics of the flows during the transfer of said flows,
- defining new flow transfer rules as a function of the result of the analysis,
- transmitting the new flow transfer rules to the remote access network,
- rerouting the exchanged flows by means of a switching element (44) to a control module (46) capable of applying to the rerouted flows a chain of functions such as security, compression, acceleration, flow conditioning, bandwidth adjustment,
and
- transferring the flows to the recipient according to the new transfer rules by using at least one additional route under the control of the control module (46) and at least one other control module (56) with which the control module (46) exchanges control data (60) so as to make the best use of the available network resources.

2. Method according to claim 1, also comprising the following steps:
- continuously measuring the QoE obtained for each flow,
- continuously evaluating the margin between predefined QoE objectives and the measured QoEs,
- adapting the new transfer rules as a function of the states of the transfer means so as to reduce the margin between the predefined QoE objectives and the measured QoEs and to bring the system into balance, maximizing the QoE.

3. Method according to claim 2, also comprising a step consisting of coordinating the set of adjustments of the transfer functions of all the flows so as to optimize the use of the available network resources.

4. Method according to claim 3, also comprising a step consisting of collecting control flow transfer characteristics intended to coordinate the exchanges between the local access network and the remote access network so as to continuously supervise the flow transfer means.

5. Distributed control device for the exchanges of data flows between at least one source connected to a wide area telecommunication network via a local access network and at least one recipient connected to said wide area telecommunication network via a remote access network comprising a central module MC (20) intended to establish a global policy defining the rules for transfer of the flows between the source and the recipient, a module M1 (21) intended to identify the data flows and to analyze these flows in order to determine the current rules of access to the wide area network, a module M2 (22) intended to route the flows between a local access network and a remote access network according to the adapted transfer rules for each flow, and to create dynamically at least one additional route for exchange of the flows based on the new transfer rules, a module M3 (23) intended to measure continuously the QoE obtained on the flows at the output of the module M2, a module M4 (24) intended to supervise continuously the transfer means of the flows identified by the module M1, a module M5 (25) which continuously receives QoE indicators measured by the module M3 and transfer means supervision reports established by the module M4, continuously evaluates the margin between QoE objectives and the results observed and defines the new transfer rules as a function of the states of the transfer means,
**characterized in that** it comprises a switching element (44) capable of rerouting the exchanged flows by means of a switching element (44) to a control module (46) capable of applying to the rerouted flows a chain of functions such as security, compression, acceleration, flow conditioning, bandwidth adjustment, said control module (46) being capable of exchanging control data (60) with another control module (56) so as to transfer the flows to the recipient according to the new transfer rules by using at least one additional route under the control of the control modules (46) and (56) by continuous end-to-end QoE-oriented flow-by-flow measurements in order to reduce the margin evaluated and to bring the system into balance, maximizing QoE.

6. Computer program stored on a recording medium comprising instructions for implementing the steps of the method according to any one of claims 1 to 4 when it is executed on a computer.
